# EUROPEAN PATENT APPLICATION

(11) **EP 3 622 791 A1**
(43) Date of publication of application: **18.03.2020**
(21) Application number: 19197459.1
(22) Date of filing: 16.09.2019
(51) Int. Cl.: A01B 51/02, A01B 75/00

(54) **VEHICLE FOR WORKING AT LOW HEIGHTS**

(30) Priority: 14.09.2018 IT 201800008629
(71) Applicant: Z.F. S.r.l., 36040 Sarego (VI) (IT)
(72) Inventor: Zorzetto, Zeno, 36040 SAREGO (VI) (IT)
(74) Representative: Fisauli, Beatrice A. M.

(57) **Abstract**

This invention consists of a leveler that is capable to bring two or more tiles with which it is put in contact at the same level.

## Description

The present invention relates generally to a vehicle. In particular, the present invention relates to a vehicle for carrying out work at low heights, preferably but not only agricultural work.

As it is known, vehicles are present on the market, which are also known as facilitators, on which an operator can sit down to carry out work at a low height, usually from the movement ground of the vehicle itself to a height of about one meter.

In particular, the aforesaid vehicles are used in the agricultural sector to carry out work on plants. In essence, the operator does not have to continuously crouch and stand up to move from plant to plant, but the operator remains seated on the vehicle that is moved in an automated way.

A known typology of facilitators has a frame with an only longitudinal bar to the ends of which two pairs of wheels, a pair for each end, are constrained with their respective axle.

The aforesaid facilitators are therefore provided with a seat that is fixed centrally to the longitudinal bar and is turned towards a side of the vehicle, so that the operator sitting there can easily access to the plants to be treated, without any hindrance.

As per prior art, the steering of the vehicle is achieved by tilting the seat towards one side or the other side of the vehicle, namely by rotating the longitudinal bar around the axis of greatest development. An appropriate articulation between the longitudinal bar and each axle of the wheels causes that the same axles are no more parallel, thus making the vehicle steer.

In this way, the operator can decide whether steering and in which direction, inclining his body, specifically his bust, forward or backward, but in any case, he remains seated and has not to act with his hands on any control elements.

Otherwise, instead, to control the forward movement or backward movement of the vehicle, the operator has usually to act with his hands on a cloche or lever.

Consequently, whenever the operator decides to move the vehicle, he has to abandon his present activity, at least with one hand, so as to be able to act on the lever and move the vehicle.

One problem of the facilitators made according to prior art is therefore that these facilitators do not offer a full continuity to the work in progress.

In order to solve this problem, some vehicles can include a speed regulator which, once activated and set, ensures that the vehicle proceeds continuously at a selected speed.

The aforesaid solution is not optimal because the speed chosen may often need to be changed, for example in the case in which the operator has to act on spaced plants.

An object of the present invention is to provide a vehicle for work at low heights solving the above problems and other problems of the known vehicles.

Another object of the present invention is to provide a vehicle for work at low heights making the handling of the vehicle as smooth as possible.

All the aforesaid objects and others are achieved according to the invention through a vehicle to carry out work at low heights and movable on a ground, comprising:
- a support frame to which a front axle with two front wheels and a rear axle with two rear wheels are bound;
- a seat which is movably fastened to the support frame and on which an operator can sit, said seat facing one side of the vehicle when the same seat is in the rest position and the vehicle is moving forward;

- a motor having a rotation pin coupled to at least one of the front axle and the rear axle, so that when the motor is activated, the vehicle advances or retracts;
- feeding means adapted to feed the motor;
- a movement device adapted to activate the motor so that a rotation pin rotates according to a first direction of rotation or according to a second direction of rotation, opposite to the first direction of rotation, so as to selectively drive the vehicle forward or backward.

The vehicle according to the invention is characterized by the fact that the movement device comprises:
- a pin to which the seat is fixed, so that the seat can rotate towards the front axle or towards the rear axle;
- a selecting element fixed to the pin;
- a first switch arranged towards the front axle with respect to the pin and adapted to activate the motor so as to rotate the rotation pin according to the first direction of rotation and move the vehicle forward.
Through this configuration, when the seat is rotated towards the front axle, the pin rotates and displaces the selecting element onto the first switch so as to activate the motor and the rotation pin rotates according to the first direction of rotation in order to move the vehicle forward.

In addition, the vehicle according to the invention may comprise a second switch which is arranged in a position opposite to the first switch with respect to the pin and consequently towards the rear axle, so that when the seat is rotated towards the rear axle, the pin rotates and displaces the selecting element onto the second switch, so as to activate the motor and the rotation pin rotates according to the second direction of rotation so as to retract the vehicle.

Advantageously, the axis of rotation of the pin may be vertical with respect to the ground on which the vehicle moves. In this way, the operator sitting on the seat facing one side of the vehicle can rotate the seat towards the front part or towards the rear part of the vehicle and control, therefore, the movement of the vehicle forward or backward.

Besides, elastic means may be bound to the pin and are adapted to hinder the rotation movement of the pin itself. In this way, the operator has a better control of the forward or backward command.

A first tongue may be fixed to the pin and the end of said tongue abuts on a first spring locked by a first peg and likewise, a second tongue may be fixed to the pin and has a development opposite to the first tongue, the end of the second tongue abutting on a second spring locked by a second peg.

Through this configuration, it is possible to easily replace the springs and the entire elastic contrast system.

Moreover, the pin may be coupled to a bar connected to adjusting means that adjust the speed of the rotation pin of the motor. In this way, by rotating the seat it is also possible to accelerate or decelerate the vehicle.

In particular, a bar may be fixed to the pin and has a toothed end adapted to engage a toothed wheel, connected to a potentiometer connected, in turn, to the motor, so that the rotation of the toothed wheel controls the potentiometer and consequently, the speed of the motor.

Besides, a control unit may be comprised and is connected to the motor, the potentiometer, the pin, and to at least one of the first switch and the second switch. In this way, by controlling the control unit it is possible to verify and control all the devices in the vehicle.

Advantageously, the motor of the vehicle may be electric and at least one battery may be included to power the motor.

Further features and details can be better understood from the following specification that is supplied by way of a non-limiting embodiment, as well as from the annexed drawing, wherein:
Fig. 1 is a schematic side view of a vehicle for working at low heights, made according to the invention and provided with a seat on which an operator can sit;
Fig. 2 is a top view of the vehicle in Figure 1, without the seat;

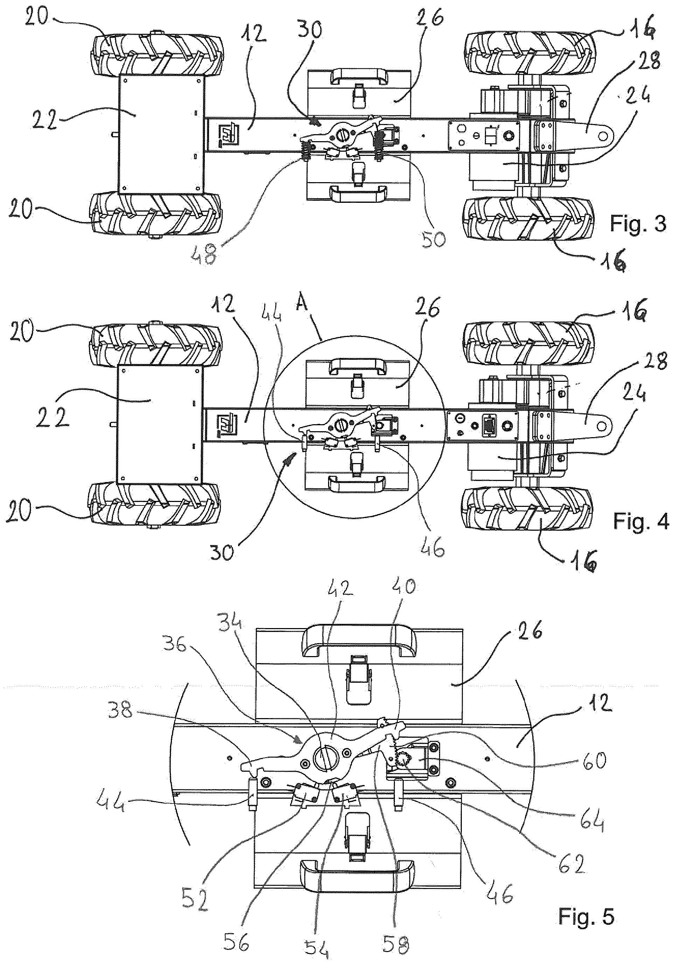

Fig. 3 is a top view of the vehicle in Figure 2, in which the operating devices are arranged according to a first configuration allowing the vehicle to be moved;
Fig. 4 is a top view of the vehicle in Figure 3, some elements being omitted for a better understanding of the operation;
Fig. 5 is a view of a detail of the vehicle in Figure 4, denoted by A in the same Figure 4,
Figures 6, 7 and 8 are a side view, a top view and a rear view of the vehicle in Figure 2, in steering, respectively.

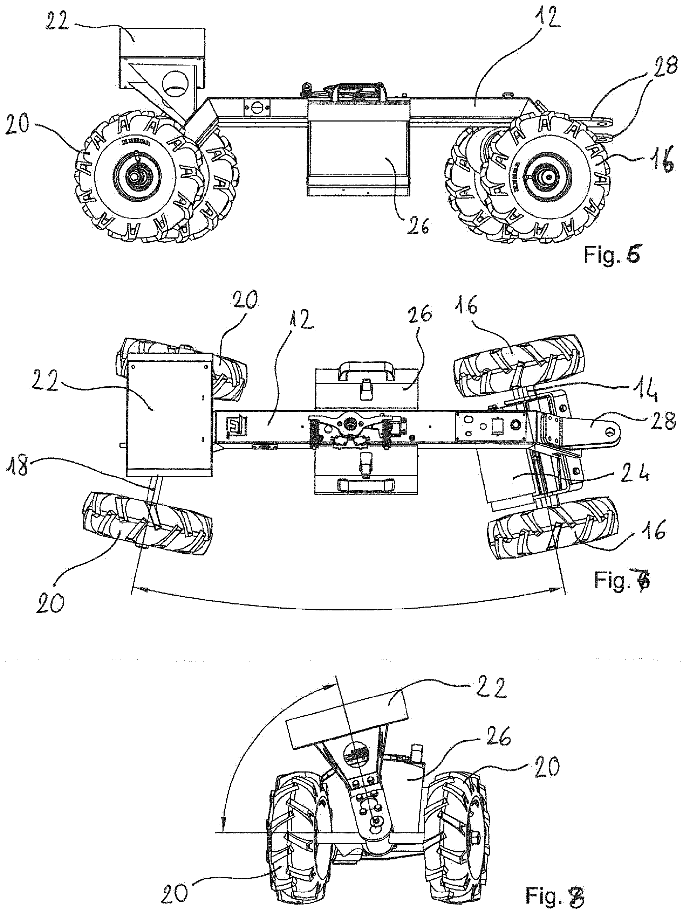

With reference to the annexed drawing, reference number 10 denotes a vehicle for working at low heights, which comprises a support frame configured as a longitudinal bar 12 to which a front axle 14 with two front wheels 16 and a rear axle 18 (visible only in Figure 7) with two rear wheels 20 are constrained by means of joints that are configured according to prior art.

The joints that connect the longitudinal bar 12 to the axles 14, 18 allow the same axles 14, 18 to rotate with respect to each other depending on the inclination of the longitudinal bar 12, so that it is possible to make the vehicle steer as shown in Figures 6, 7, 8.

A basket 22 for holding objects is fixed to the longitudinal bar 12 in correspondence of the rear axle 18, so that the operator can put in it any objects to be collected.

The vehicle 10 is moved by means of an electric motor 24 which is positioned in the front part of the vehicle itself and is coupled by means of a rotation pin and other connecting elements with the front axle 14 which is therefore fixed so as to give movement to the front wheels 16.

The electric motor 24 is powered by batteries 26 which are fixed in a removable way to the longitudinal bar 12.

Besides, two parallel perforated brackets 28 are included in correspondence of the front part of the vehicle 10 and are adapted to allow the attachment of a cart or other similar means.

A movement device 30 for moving the vehicle 10 is fixed above the longitudinal bar 12 and is operable by rotating a seat 32.

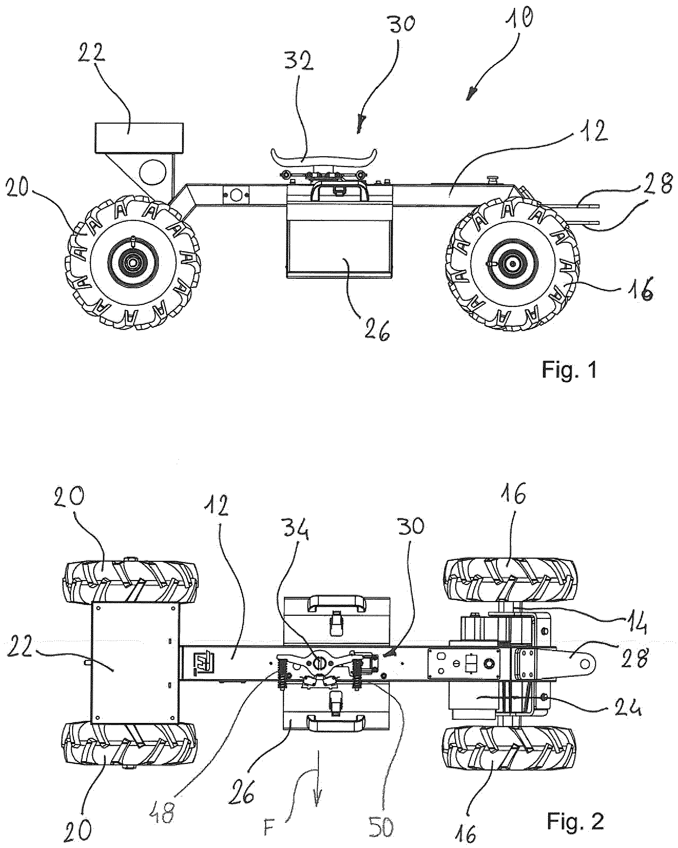

The seat 32 is shown only in Figure 1 while in the other figures, the seat is not shown so as to facilitate vision and understanding of the other elements that form the movement device 30.

The movement device 30 includes a pin 34 to which the seat 32 is rigidly fixed. The pin 34 has a vertical axis and is free to rotate with respect to the longitudinal bar 12 on which the pin is pivoted.

Moreover, a lever 36 is fixed to the pin 34 and includes a first tongue 38 and a second tongue 40 which are fixed, diametrically opposed, to a central ring 42 which in turn, is rigidly secured to the pin 34.

Furthermore, the movement device 30 includes a first peg 44 and a second peg 46 which are fixed to the longitudinal bar 12 and are arranged in correspondence of the free ends of the first tongue 38 and second tongue 40, respectively.

A first spring 48 is inserted in the first peg 44 and a second spring 50 is inserted in the second peg 46.

The springs 48, 50 counteract the rotation movement of the lever 36 because when the pin 34 is turned counterclockwise, the free end of the first tongue 38 abuts and presses on the first spring 48 while when the pin 34 is turned clockwise, the free end of the second tongue 40 abuts and presses on the second spring 50.

The lever 36 is fixed to the pin 34 so that when the seat 32 is turned in a direction that is perfectly perpendicular to the direction of development of the longitudinal bar 12, the springs 48, 50 do not undergo any thrust (or at least a minimal push) by the respective tongue 38, 40, according to the configuration shown in Figure 2.

Besides, the movement device 30 includes a first switch 52 and a second switch 54 which, if alternatively activated, operate the electric motor and rotate the front axle 14 in the direction of moving back and forward the vehicle 10, respectively.

A selecting element 56 is fixed to the central ring 42, centrally with respect to the first tongue 38 and second tongue 40.

Depending on the rotation of the seat 32 and therefore of the pin 34, the central ring 42 is turned clockwise or counterclockwise by bringing the selecting element 56 in correspondence of the first switch 52 and second switch 54, respectively and controlling also the backward and forward movement of the vehicle.

Besides, a bar 58 is fixed to the pin 34. The bar 58 is provided with a toothed end 60 that engages a toothed wheel 62. In particular, the toothed end 60 is elongated and the bar 58 is fixed to the pin 34 so that when the seat 32 is turned in a direction that is perfectly perpendicular to the direction of development of the longitudinal bar 12 (as indicated by the arrow F in Figure 2), the toothed wheel 62 is in contact with the central portion of the same toothed end 60.

In this way, as the seat is turned to the right or to the left, the toothed wheel 62 is always rotated in one direction or in the opposite direction.

The toothed wheel 62 adjusts a potentiometer 64 which is connected to the electric motor 24 and to the batteries 26 and which therefore controls the power of the electric motor and consequently its speed.

Through the movement device 30, the operator, who is seated and facing according to the arrow F in Figure 2, can control the advancement or retraction of the vehicle 10 and its speed, without the need to act with his hands on levers or cloche.

In fact, the operator can simply rotate his bust to the right or to the left so as to rotate the seat clockwise or counterclockwise, respectively.

The rotation of the seat 32 involves a corresponding rotation of the pin 34 which will in turn rotate the central ring 42. Depending on the direction of rotation, the selecting element 56 will activate the first switch 52 or the second switch 54 so as to command the retraction or the advancement of the vehicle 10, respectively.

Depending on the degree of seat rotation, the toothed wheel 62 will be more or less rotated so as to modulate the speed of the vehicle 10.

Besides, the lever 36 together with the springs 48, 50 will counteract the rotation of the seat 32 in one direction or the other direction. In particular, as the degree of seat rotation increases, the contrast of the springs 48, 50 increases, which makes the operation of the movement device 30 of the vehicle 10 maximally safe and even intuitive.

The configuration of the same movement device 30 is such that when the operator decides to move forward or backward, the operator can move his legs towards the desired direction, to the right or to the left, and place his feet on the ground.

Keeping his feet on the ground always in the same position causes the vehicle to move towards the chosen direction, initially with a speed that is defined by the degree of initial rotation of the seat. Then, the speed will decrease evenly since also the inclination degree of the seat will also tend to decrease.

This particular advantage is achieved by the cooperation of the toothed end 60 of the bar 58 with the toothed wheel 62 that controls the potentiometer 64.

In addition to a control unit, the vehicle 10 is also equipped with other devices and mechanisms, such as a battery indicator, an indicator, for example a LED, to indicate any problems of the control unit, an emergency button, a switching-on mechanism, a gear selector, a USB socket or other protocol, and others.

Furthermore, variants to be considered included in the scope of the invention may be provided.

For example, the axis of rotation of the seat may be horizontal instead of vertical. In this way, the operator can lean towards the front or the rear of the vehicle and thus control the advance or retraction of the vehicle itself.

## Claims

1. Vehicle (10) to carry out work at low heights and mobile on land, comprising:
- a support frame (12) to which a front axle (14) with two front wheels (16) and a rear axle (18) with two rear wheels (20) are bound;
- a seat (32) which is movably fastened to the support frame (12) and on which a user can sit, said seat facing one side of the vehicle when the same seat is in the rest position and the vehicle is moving forward;
- a motor (24) having a rotation pin coupled to at least one of the front axle (14) and the rear axle (18), so that when the motor is activated, the vehicle (10) advances or retracts;
- feeding means (26) adapted to feed the motor (24);
- a movement device (30) adapted to activate the motor (24) so that the rotation pin rotates according to a first direction of rotation or according to a second direction of rotation, opposite to the first direction of rotation, so as to selectively drive the vehicle (10) forward or backward;
**characterized by the fact that** the movement device (30) comprises:
- a pin (34) to which the seat (32) is fixed, so that the seat can rotate towards the front axle (14) or towards the rear axle (18);
- a selecting element (56) fixed to the pin (34);
- a first switch (52) arranged towards the front axle (14) with respect to the pin (34) and adapted to activate the motor (24) so as to rotate the rotation pin according to the first direction of rotation and move the vehicle (10) forward;
so that when the seat (32) is rotated towards the front axle (14), the pin (34) rotates and displaces the selecting element (56) onto the first switch (52) so as to activate the motor (24) and the rotation pin rotates according to the first direction of rotation in order to move the vehicle (10) forward.

2. Vehicle (10) according to the preceding claim, wherein a second switch (54) is comprised and is arranged in a position opposite to the first switch (52) with respect to the pin (34) and consequently towards the rear axle (18), so that when the seat (32) is rotated towards the rear axle (18), the pin (34) rotates and displaces the selecting element (56) onto the second switch (54) so as to activate the motor (24) and the rotation pin rotates according to the second direction of rotation so as to retract the vehicle (10).

3. Vehicle (10) according to one of the preceding claims, wherein the axis of rotation of the pin (34) is vertical with respect to the ground on which the vehicle (10) moves.

4. Vehicle (10) according to one of the preceding claims, wherein elastic means (48, 50) are bound to the pin (34) and are adapted to hinder the rotation movement of the pin (34) itself.

5. Vehicle (10) according to the preceding claim, wherein a first tongue (38) is fixed to the pin (34) and the end of said tongue abuts on a first spring (48) locked by a first peg (44).

6. Vehicle (10) according to the preceding claim, wherein a second tongue (40) is fixed to the pin (34) and has a development opposite to the first tongue (38), the end of the second tongue (40) abutting on a second spring (50) locked by a second peg (46).

7. Vehicle (10) according to one of the preceding claims, wherein the pin (34) is coupled to a bar (58) connected to adjusting means (62, 64) that adjust the speed of the rotation pin of the motor (24).

8. Vehicle (10) according to the preceding claim, wherein a bar (58) is fixed to the pin (34) and has a toothed end (60) adapted to engage a toothed wheel (62), connected to a potentiometer (64) connected, in turn, to the motor (24), so that the rotation of the toothed wheel (62) controls the potentiometer (64) and consequently, the speed of the motor (24).

9. Vehicle (10) according to one of the preceding claims, wherein a control unit is comprised and is connected to the motor, the potentiometer, the pin (34), and at least one of the first switch (52) and the second switch (54).

10. Vehicle (10) according to one of the preceding claims, wherein the motor (24) is electric and at least one battery (26) is included.
